# EUROPÄISCHE PATENTSCHRIFT

(11) **EP 0 427 666 B1**
(45) Veröffentlichungstag und Bekanntmachung des Hinweises auf die Patenterteilung: **15.12.1993**
(21) Anmeldenummer: 90810809.5
(22) Anmeldetag: 23.10.1990
(51) Int. Cl.: A47J 31/36, A47J 31/54

(54) **Kaffeemaschine zur wahlweisen Zubereitung von Espresso-Kaffee oder Filterkaffee**
Coffee machine for selectively making espresso coffee or filter coffee
Machine à café pour préparer au choix du café expresso ou du café filtre

(30) Priorität: 07.11.1989 DE 3937000
(43) Veröffentlichungstag der Anmeldung: 15.05.1991
(73) Patentinhaber: ESTRO S.R.L., I-24100 Bergamo (IT)
(72) Erfinder: Willi, Marco, CH-8620 Wetzikon (CH)
(74) Vertreter: Rottmann, Maximilian R.

(56) Entgegenhaltungen:
- EP-A- 0 004 659
- EP-A- 0 073 496
- EP-A- 0 084 489
- DE-A- 1 429 976
- FR-A- 1 563 536
- GB-A- 2 139 481
- US-A- 4 309 939

## Beschreibung

Die vorliegende Erfindung betrifft eine Kaffeemaschine zum wahlweisen Betrieb im Druckverfahren für die Zübereitung von Espresso-Kaffee oder im drucklosen Filterverfahren für die Zubereitung von Filterkaffee nach dem Oberbegriff des Patentanspruchs 1.

Bei bekannten Kaffeemaschinen dieser Art sind gleichsam zwei unterschiedliche Maschinen in einem Gehäuse vereinigt: Erstens eine Maschine zur Herstellung von Filterkaffee, die das Wasser aus einem gemeinsamen oder separaten Kaltwasserbehälter bezieht und dieses mittels eines Boilers oder Durchlauferhitzers auf ca. Siedetemperatur erwärmt, so dass das erhitzte Wasser durch eine Leitung in einen Filterhalter fliessen kann, in welchem der sich darin befindliche pulverförmige Kaffee zum Kaffeegetränk aufgebrüht wird. Zweitens eine Maschine zur Herstellung von Espresso-Kaffee im Druckverfahren, bei welcher eine Wasserpumpe das Kaltwasser aus dem gemeinsamen oder einem separaten Kaltwasserbehälter bezieht, dieses in einen Boiler oder Durchlauferhitzer und von dort, nachdem es auf die gewünschte Temperatur aufgeheizt worden ist, in einen an die Maschine angesetzten, mit pulverförmigem Kaffee gefüllten Filterhalter drückt.

Nachteile dieser bekannten Maschinen bestehen darin, dass der konstruktive Aufwand recht hoch ist, indem z.B. zwei verschiedene Warmwasserbereiter und zwei verschiedene, örtlich getrennte Anschlussvorrichtungen für den Filterhalter sowie für den Siebhalter vorgesehen werden müssen, und dass derartige Maschinen einen grossen Platzbedarf beanspruchen.

Aus der EP-A-004 659 ist eine Kaffeemaschine zur wahlweisen Erzeugung von Heisswasser für die Kaffeezubereitung oder von Dampf bekannt. Diese Vorrichtung weist einen Siebhalter und eine Dampfentnahmevorrichtung auf, welche gegeneinander austauschbar in die Kaffeemaschine einsetzbar sind. An der Dampfentnahmevorrichtung ist ein seitlicher Steuernocken angebracht, der beim Einsetzen der Dampfentnahmevorrichtung in die Kaffeemaschine einen Schalter betätigt, mittels welchem die Fördermenge einer Pumpe reduziert wird, so dass das geförderte Wasser im Durchlauferhitzer restlos verdampft. Dadurch wird die Kaffeemaschine vom Modus der Heisswassererzeugung in den Modus der Dampferzeugung umgeschaltet.

Ausgehend von der Erkenntnis, dass zur Zubereitung von Espresso-Kaffee einerseits und zur Zubereitung von gewöhnlichem Kaffee andererseits sowohl die Durchflussmenge des erhitzten Wassers pro Zeiteinheit als auch die Temperatur des Wassers angepasst werden müssen, hat man in der DE-AS 17 78 604 vorgeschlagen, die Leistung der das Heisswasser fördernden Pumpe oder die Heizleistung des Durchlauferhitzers veränderbar zu gestalten. Zwar ist dadurch die Möglichkeit gegeben, die Betriebsparameter der Maschine manuell anzupassen, jedoch besteht die Gefahr der Fehlbedienung der Maschine.

Die Erfindung bezweckt, eine derartige Kaffeemaschine zu vereinfachen und betriebssicherer zu gestalten, indem zwangsläufig einer bestimmten Aufbrühvorrichtung (Sieb oder Filter) eine bestimmt Betriebsart entspricht. Somit kann mit derselben, einzigen Maschine, unter Verwendung des gleichen Boilers und der gleichen Wasserfördervorrichtung, sowohl im drucklosen Verfahren Filterkaffee als auch im Druckverfahren Espresso-Kaffee hergestellt werden kann, ohne dass die Bedienungsperson irgendwelche betriebliche Parameter der Maschine manuell umstellen müsste.

Ausgehend von einer Dampf- und Wasseraufbereitungsmaschine zur Herstellung von Kaffeeaufgüssen wie sie in Dokument DE-A-17 78 604 offenbart ist, wird diese Aufgabe gemäss der Erfindung durch die im Kennzeichen des Anspruchs 1 angegebenen Massnahmen gelöst.

Gemäss der Erfindung ist somit vorgesehen, dass die Schaltmittel beim Einsetzen des einen oder anderen Brühorgans selbstätig von der einen in die andere Betriebsart umschalten. Dadurch wird die Handhabung derartiger Kaffeemaschinen beim Wechsel von der einen in die andere Betriebsart wesentlich erleichtert, und zwar insbesondere durch die selbständige Umschaltung des Betriebszustandes beim Austausch des ersten Brühorgans durch das zweite und umgekehrt.

Dies kann z.B. dadurch erreicht werden, dass die Anschlussvorrichtung zum wahlweisen Anschluss des Filterträgers anstelle des Siebhalters eingerichtet ist und dass der Anschlussvorrichtung Schaltmittel zugeordnet sind, die beim Einsatz des einen Brühorgans eine erste Schaltstellung und beim Einsatz des anderen Brühorgans selbsttätig eine zweite Schaltstellung einnehmen.

Eine bevorzugte Ausführungsform des Erfindungsgegenstandes besteht darin, dass die beiden Brühorgane in einer bestimmten Ausdehnungsrichtung unterschiedliche Abmessungen haben und dass die Schaltmittel des Betriebsartenumschalter einen Stössel aufweisen, der so angeordnet ist, dass er nur von dem eingesetzten Brühorgan mit der grösseren Abmessung in der genannten Ausdehnungsrichtung erreicht und beim Einsetzen dieses Brühorgans durch dasselbe von der ersten in die zweite Schaltstellung übergeführt wird.

Beispielsweise kann der Filterträger einen grösseren Durchmesser aufweisen als der Siebhalter, wie das bei den bisher verwendeten, aufsetzbaren Filterträgern üblicherweise zutrifft. In diesem Fall ist der Stössel des Betriebsartenumschalter vorzugsweise im Umfangsbereich des eingesetzten Filterträgers angeordnet.

Die beiden Betriebsarten der Kaffeemaschine unterscheiden sich vor allem im Grad der Förderleistung der Wasserpumpe und in der Höhe der Wassertemperatur im Heisswasserbereiter. Die Anordnung wird deshalb mit Vorteil so getroffen, dass der Betriebsartenumschalter bei seiner Betätigung eine Umsteuerung der Sollwerteinstellung wenigstens der diese beiden Grössen beeinflussenden Regelorgane bewirkt. Dabei kann der Sollwert dieser Regelorgane so eingestellt sein, dass beim Betrieb der Kaffeemaschine im Druckverfahren die Wasserpumpe mit voller Förderleistung arbeitet und die Wassertemperatur im Heisswasserbereiter auf etwa 85 bis 90°C gehalten wird, während beim Betrieb im drucklosen Filterverfahren die Förderleistung der Wasserpumpe reduziert, z.B. auf etwa 20% herabgesetzt und die Wassertemperatur im Heisswasserbereiter auf etwa 95°C erhöht wird.

Sofern die Kaffeemaschine eine Warmhalteplatte als Untersatz für eine Filterkaffee enthaltende Kaffeekanne aufweist, kann der Betriebsartenumschalter auch die Einschaltung der Warmhalteplatte steuern, und zwar so, dass die Warmhalteplatte beim Betrieb der Kaffeemaschine im Druckverfahren ausgeschaltet und beim Betrieb im drucklosen Filterverfahren, also während und nach der Zubereitung von Filterkaffee eingeschaltet ist, d.h. so lange der Filterträger eingesetzt ist.

Ferner können Mittel vorgesehen sein, mit denen die Förderleistung der Wasserpumpe manuell verstellbar ist, um die Stärke des zubereiteten Kaffees zu verändern, ferner Mittel, mit denen die Anzahl der abzugebenden Kaffeeportionen einstellbar ist.

In der beigefügten Zeichnung ist ein Ausführungsbeispiel der Erfindung schematisch dargestellt, und zwar zeigen:
- Fig. 1: die Kaffeemaschine im Zustand zum Betrieb im Druckverfahren für die Zübereitung von Espresso-Kaffee und
- Fig. 2: die Kaffeemaschine im Zustand zum Betrieb im drucklosen Filterverfahren für die Zubereitung von Filterkaffee.

Die dargestellte Kaffeemaschine enthält in einem Gehäuse 1 einen Kaltwasserbehälter 2, eine Wasserpumpe 3 mit regelbarer Förderleistung und einen elektrischen Heisswasserbereiter 4 mit Temperaturregelung. Die jeweils erforderliche Menge Kaltwasser wird dem Heisswasserbereiter 4 durch die Wasserpumpe 3 über eine Zuleitung 5 zugeführt. Ein für die Regelung der Durchlaufgeschwindigkeit des zu fördernden Kaltwassers vorgesehenes Regelventil 6a bzw 6b kann vor oder nach der Wasserpumpe 3 in die Zuleitung 5 eingeschaltet sein. Der Heisswasserbereiter 4 ist mit drei Thermostaten 7, 8 und 9 ausgerüstet. Der Thermostat 7 beispielsweise ist beim Betrieb der Kaffeemaschine im Druckverfahren wirksam und hält die Wassertemperatur im Heisswasserbereiter 4 auf etwa 85 bis 90°C, während der Thermostat 8 beim Betrieb der Kaffeemaschine im drucklosen Filterverfahren wirksam ist und die Wassertemperatur auf etwa 95°C hält. Der Thermostat 9 ist für einen weiteren, hier nicht näher behandelten Betriebszustand der Kaffeemaschine vorgesehen, nämlich für die Erzeugung von Wasserdampf. Ein Steuer- und Regelgerät 10 dient zur Regelung der Förderleistung der Wasserpumpe 3 und zur Ansteuerung der einzeln wirksamen Thermostaten 7, 8 oder 9 und des Regelventils 6a bzw. 6b. Die Förderleistung der Wasserpumpe 3 kann dabei elektrisch, z.B. durch eine Phasenanschnittsteuerung oder hydraulisch, z.B. durch Einschalten eines Überströmventils oder eines Durchflussreglers, verstellt werden.

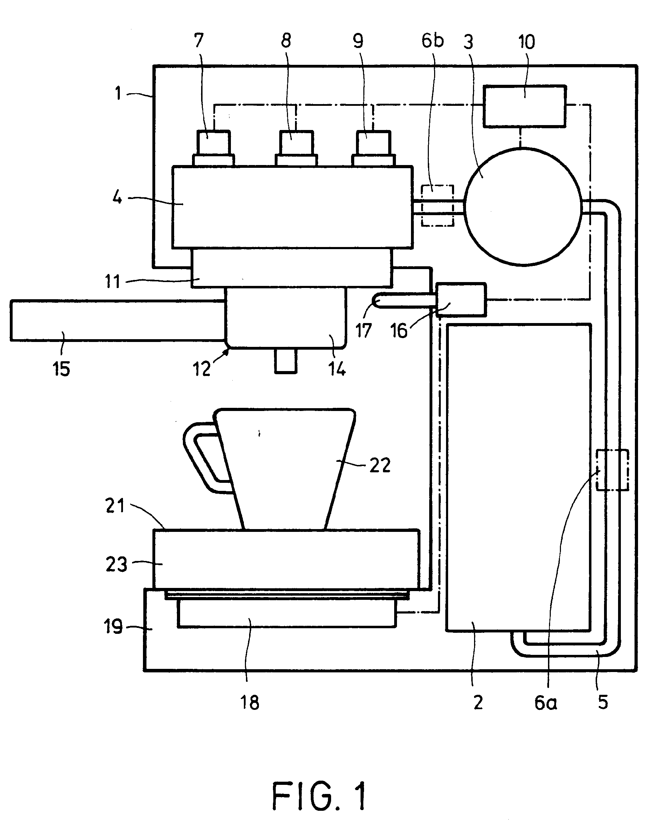

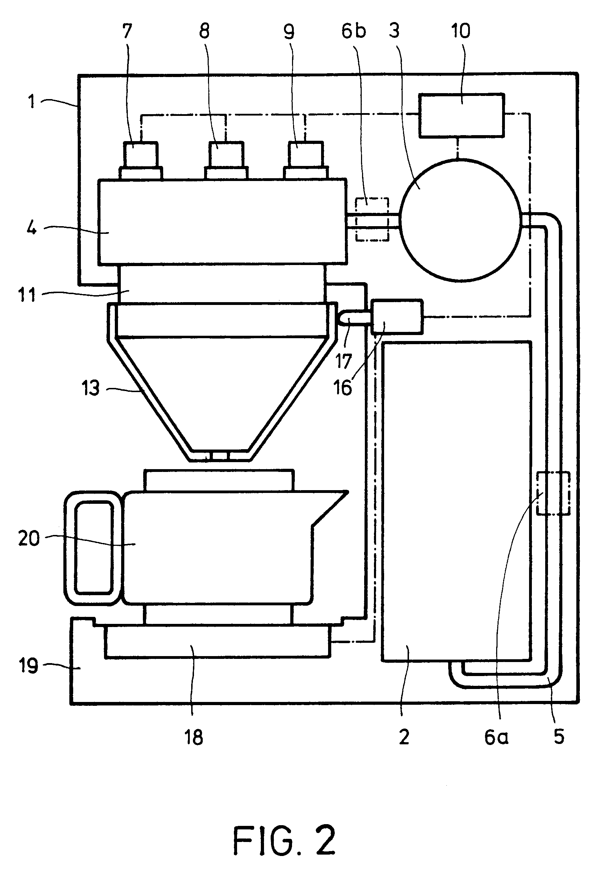

Die Kaffeemaschine weist ferner eine Anschlussvorrichtung 11 für den Anschluss eines dem jeweiligen Betriebszustand entsprechenden Brühorgans an den Heisswasserbereiter 4 auf. Insbesondere ist die an der Unterseite des Heisswasserbereiters 4 angebrachte Anschlussvorrichtung 11 für den Anschluss eines ersten Brühorgans in Form eines Siebhalters 12 (Fig. 1) und eines zweiten Brühorgans in Form eines Filterträgers 13 (Fig. 2) eingerichtet. Zum Anschluss des Siebhalters 12, der im wesentlichen aus einer siebartigen Brühkammer 14 mit einem Handgriff 15 besteht, können an sich bekannte, nicht dargestellte Mittel vorhanden sein, welche den Siebhalter mit einem Bajonettverschluss an der Anschlussvorrichtung halten. Für den Einsatz des Filterträgers 13 sind z.B. an der Unterseite der Anschlussvorrichtung 11 eine horizontale Gleitführung (nicht dargestellt) und am oberen Rand des Filterträgers 13 Gleitstege (nicht dargestellt) vorgesehen, so dass der Filterträger 13 durch seitliche Bewegung an der Unterseite der Anschlussvorrichtung 11 anbringbar ist.

Der Anschlussvorrichtung 11 ist ein Betriebsartenumschalter 16, vorzugsweise in Form eines Mikroschalters, zugeordnet, der mit dem Steuer- und Regelgerät 10 schaltungsmässig verbunden ist und der ein horizontal hin- und herbewegliches Schaltglied 17 aufweist. Der Betriebsartenumschalter 16 ist etwas unterhalb der Anschlussebene der Anschlussvorrichtung 11 derart angeordnet, dass dessen Schaltglied 17 in den Umfangsbereich des eingesetzten Brühorgans ragt. Dabei wird davon ausgegangen, dass der Filterträger 13 einen grösseren Durchmesser aufweist als die Brühkammer 14 des Siebhalters 12, so dass der Siebhalter 12 bei seinem Einsatz in die Anschlussvorrichtung 11 das Schaltglied 17 des Betriebsartenumschalters 16 mit Abstand nicht erreicht, während beim Einschieben des Filterträgers 13 dessen Umfangsrand das Schaltglied 17 zurückstösst, wodurch der Betriebsartenumschalter 16 betätigt, d.h. von einer ersten in eine zweite Schaltstellung übergeführt wird. Mit dieser Schalthandlung wird die Kaffeemaschine vom Betriebszustand "ESPRESSO" in den Betriebszustand "FILTERKAFFEE" umgeschaltet.

Die Kaffeemaschine ist mit einer Warmhalteplatte 18 ausgerüstet, die im vorspringenden Unterteil 19 des Gehäuses 1 eingebaut ist und als Untersatz für eine Kaffekanne 20 zur Aufnahme von Filterkaffee dient. Die Warmhalteplatte 18 ist nur in dem in Fig. 2 dargestellten Betriebszustand der Kaffeemaschine eingeschaltet, wobei die Ein- und Ausschaltung der Warmhalteplatte 18 ebenfalls durch den Betriebsartenumschalter 16 gesteuert wird. Bei der Zubereitung von Espresso-Kaffee wird ein separater Untersatz 21 für eine Kaffeetasse 22 verwendet, der mit einer auf den Unterteil 19 des Gehäuses 1 aufsetzbarer Auffangwanne 23 versehen ist.

## Patentansprüche

1. Kaffeemaschine zur wahlweisen Zübereitung von Espresso-Kaffee im Druckverfahren oder von Filterkaffee im drucklosen Filterverfahren, mit einem Kaltwasserbehälter (2), mit Mitteln (4) zur Erwärmung des Kaltwassers, und mit Mitteln (3) zum Fördern des erwärmten Wassers, wobei die Mittel (4) zur Erwärmung des Kaltwassers bezüglich der Erwärmungstemperatur umschaltbar sind, wobei ferner die Mittel (3) zum Fördern des erwärmten Wassers eine Wasserpumpe umfassen, welche bezüglich der Förderleistung umschaltbar ist, und wobei Schaltmittel (16) vorgesehen sind, mittels welcher die Erwärmungstemperatur des Wassers und die Förderleistung der Wasserpumpe umschaltbar sind, dadurch gekennzeichnet, dass eine Anschlussvorrichtung (11) zum wahlweisen Anschluss eines ersten Brühorgans in Form eines Siebhalters (12) oder eines zweiten Brühorgans in Form eines Filterträgers (13) an die Mittel zum Erwärmen und Fördern des Wassers vorgesehen ist, und dass die Schaltmittel (16) beim Einsetzen des einen oder anderen Brühorgans (12 bzw. 13), d.h. entsprechend dem Einsatz des Siebhalters (12) oder des Filterträgers (13), selbstätig von der einen in die andere Betriebsart umschalten.

2. Kaffeemaschine nach Patentanspruch 1, dadurch gekennzeichnet, dass die beiden Brühorgane (12, 13) in einer bestimmten Ausdehnungsrichtung unterschiedliche Abmessungen haben und dass die Schaltmittel (16) einen Stössel (17) aufweisen, der so angeordnet ist, dass er nur von dem eingesetzten Brühorgan (13) mit der grösseren Abmessung in der genannten Ausdehnungsrichtung erreicht und beim Einsetzen dieses Brühorgans (13) durch dasselbe von der ersten in die zweite Schaltstellung übergeführt wird.

3. Kaffeemaschine nach Patentanspruch 2, dadurch gekennzeichnet, dass der Filterträger (13) einen grösseren Durchmesser aufweist als der Siebhalter (12) und dass der Stössel (17) im Umfangsbereich des eingesetzten Brühorgans (12 bzw. 13) angeordnet ist.

4. Kaffeemaschine nach einem der vorhergehenden Patentansprüche, dadurch gekennzeichnet, dass der Betriebsartenumschalter (16, 17) bei seiner Betätigung eine Umsteuerung der Sollwerteinstellung wenigstens der die Förderleistung der Wasserpumpe (3) und der die Wassertemperatur im Heisswasserbereiter beeinflussenden Regelorgane (7; 8; 9 bzw. 10) bewirkt.

5. Kaffeemaschine nach Patentanspruch 4, dadurch gekennzeichnet, dass der Sollwert der genannten Regelorgane (7; 8; 9 bzw. 10) so eingestellt ist, dass beim Betrieb der Kaffeemaschine im Druckverfahren die Wasserpumpe (3) mit voller Förderleistung arbeitet und die Wassertemperatur im Heisswasserbereiter (4) auf etwa 85 bis 90°C gehalten wird, während beim Betrieb im drucklosen Filterverfahren die Förderleistung der Wasserpumpe (3) herabgesetzt und die Wassertemperatur im Heisswasserbereiter (4) auf etwa 95°C erhöht wird.

6. Kaffeemaschine nach einem der vorhergehenden Patentansprüche, dadurch gekennzeichnet, dass die Maschine eine Warmhalteplatte (18) aufweist, und dass die Schaltmittel (16) auch die Einschaltung der Warmhalteplatte (18) steuern, so dass die Warmhalteplatte (18) beim Betrieb der Kaffeemaschine im Druckverfahren ausgeschaltet und beim Betrieb im drucklosen Filterverfahren eingeschaltet ist.

7. Kaffeemaschine nach Patentanspruch 1, dadurch gekennzeichnet, dass Mittel vorgesehen sind, mit denen die Förderleistung der Wasserpumpe (3) manuell verstellbar ist.

8. Kaffeemaschine nach Patentanspruch 1 oder 7, dadurch gekennzeichnet, dass die Förderleistung der Wasserpumpe (3) elektrisch, z.B. durch eine Phasenanschnittsteuerung, verstellbar ist.

9. Kaffeemaschine nach Patentanspruch 1 oder 7, dadurch gekennzeichnet, dass die Förderleistung der Wasserpumpe (3) hydraulisch, z.B. durch Einschalten eines Überströmventils oder eines hydraulischen Durchflussreglers, verstellbar ist.

## Claims

1. Coffee machine for selectively preparing Expresso coffee by means of pressure or filter coffee without the use of pressure, comprising a cold water reservoir (2), means (4) for heating the cold water and means (3) for supplying the heated water, whereby the means (4) for heating the cold water can be switched over with regard to the heating temperature, whereby further the means (3) for supplying the heated water comprise a water pump, which can be switched over as regards the feed rate, and whereby switching means (16) are provided by means of which the heating temperature of the water and the feed rate of the water pump can be switched over, characterised in that a connection means (11) is provided for selectively connecting a first infusing element shaped as a sieve holder (12) or a second infusing element shaped as a filter carrier (13) to the means for heating and supplying the water, and in that the switching means (16), when fitting one or the other infusing element (12 or 13), i.e. depending upon whether the sieve holder (12) or the filter carrier (13) is fitted, automatically switch from one to the other mode of operation.

2. Coffee machine according to claim 1, characterised in that the two infusing elements (12, 13) have different dimensions in a given direction and in that the switching means (16) have a plunger (17) which is arranged such that it is reached only by the fitted infusing element (13) with the larger dimension in the said direction and is moved from the first into the second switching position by the same, when this infusing element (13) is fitted.

3. Coffee machine according to claim 2, characterised in that the diameter of the filter carrier (13) is larger than that of the sieve holder (12) and in that the plunger (17) is disposed within the circumferential area of the fitted infusing element (12 or 13).

4. Coffee machine according to one of the preceding claims, characterised in that the mode-changeover switch (16, 17), when operated, has the effect of changing the set value setting of at least the feed rate of the water pump (3) and of the control elements (7; 8; 9 or 10) controlling the water temperature in the boiler.

5. Coffee machine according to claim 4, characterised in that the set value of the said control elements (7; 8; 9 or 10) is set such that when the coffee machine is operated using pressure the water pump (3) operates at full output and the water temperature in the boiler (4) is maintained at between 85 and 90°C approximately, whilst when the coffee machine is operated without the use of pressure for making filter coffee, the feed rate of the water pump (3) is reduced and the water temperature in the boiler (4) is raised to approx. 95°C.

6. Coffee machine according to one of the preceding claim, characterised in that the machine has a hot plate (18) and in that the switching means (16) additionally control the switching-on of the hot plate (18) so that the hot plate (18) is switched off when using the coffee machine with pressure, and is switched on when using it for making filter coffee without the use of pressure.

7. Coffee machine according to claim 1, characterised in that means are provided for manually adjusting the feed rate of the water pump (3).

8. Coffee machine according to claim 1 or 7, characterised in that the feed rate of the water pump (3) can be adjusted electrically, e.g. by means of a phase-operated control.

9. Coffee machine according to claim 1 or 7, characterised in that the feed rate of the water pump (3) can be adjusted hydraulically, e.g. by connecting an overflow valve or a hydraulic flow regulator.

## Revendications

1. Machine à café pour préparer au choix du café expresso avec le procédé sous pression ou du café filtre avec le procédé filtrant sans pression, équipée d'un réservoir à eau froide (2), de dispositifs (4) pour réchauffer l'eau froide, et de dispositifs (3) pour refouler l'eau réchauffée, les dispositifs (4) pour le réchauffement de l'eau froide étant commutable en ce qui concerne la température de réchauffement, les dispositifs (3) pour le refoulement de l'eau réchauffée comprenant une pompe à eau qui est commutable pour le débit, et des dispositifs de commutation (16) étant prévus qui permettent de commuter la température d'échauffement de l'eau et le débit de la pompe à eau, caractérisée en ce qu'un dispositif de raccordement (11) est prévu pour le branchement optionnel d'un premier organe d'infusion sous la forme d'un porte-tamis (12) ou d'un deuxième organe d'infusion sous la forme d'un porte-filtre (13) sur les dispositifs pour le réchauffement et le refoulement de l'eau, et en ce que les dispositifs de commutation (16) basculent automatiquement d'un mode à l'autre quand on introduit l'un ou l'autre des éléments d'infusion (12 ou 13), c'est à dire en fonction de l'utilisation du porte-tamis (12) ou du porte-filtre (13).

2. Machine à café selon la revendication 1, caractérisée en ce que les deux éléments d'infusion (12,13) ont des dimensions différentes dans un sens déterminé et que les dispositifs de commutation (16) ont un poussoir (17) qui est disposé de telle façon qu'il n'est atteint que par l'élément d'infusion (13) utilisé ayant la plus grande dimension dans le sens indiqué et que, lorsqu'on met en place cet élément d'infusion (13), il passe de la première position à la deuxième position de commutation.

3. Machine à café selon la revendication 2, caractérisée en ce que le porte-filtre (13) a un diamètre supérieur au porte-tamis (12) et en ce que le poussoir (17) est disposé dans la zone périphérique de l'élément d'infusion mis en place (12 ou 13).

4. Machine à café selon l'une des revendications précédentes, caractérisée en ce que, lorsque le commutateur de mode (16, 17) est actionné, il provoque une commutation de l'ajustement des valeurs de consigne pour au moins les éléments de réglage (7; 8; 9 et 10) qui influent sur le débit de la pompe à eau (3) et sur la température de l'eau dans le chauffe-eau.

5. Machine à café selon la revendication 4, caractérisée en ce que la valeur de consigne des éléments de réglage mentionnés (7; 8; 9 et 10) est ajustée de telle façon que la pompe à eau (3) fonctionne à plein rendement quand on utilise la machine avec le procédé sous pression et que la température de l'eau dans le réservoir d'eau chaude (4) soit maintenue à environ 85 à 90°C tandis que, si l'on utilise le procédé filtrant sans pression, le débit de la pompe à eau (3) est réduit et la température de l'eau dans le chauffe-eau (4) est augmentée jusqu'à environ 95°C.

6. Machine à café selon l'une des revendications précédentes, caractérisée en ce que la machine a une plaque de maintien à température (18) et en ce que les dispositifs de commutation (16) commandent également la mise en route de la plaque (18), de sorte que la plaque de maintien à température (18) est éteinte quand la machine à café fonctionne avec le procédé sous pression et est allumée quand elle fonctionne avec le procédé filtrant sans pression.

7. Machine à café selon la revendication 1, caractérisée en ce que l'on prévoit les dispositifs qui permettent de régler manuellement le débit de la pompe à eau (3).

8. Machine à café selon la revendication 1 ou 7, caractérisée en ce que le débit de la pompe à eau (3) peut être réglé par un dispositif électrique, par exemple par une commande par coupe.

9. Machine à café selon la revendication 1 ou 7, caractérisée en ce que le débit de la pompe à eau (3) peut être réglé par un dispositif hydraulique, par exemple par l'enclenchement d'une soupape de décharge ou d'un régulateur d'écoulement.
